# EUROPÄISCHE PATENTSCHRIFT

(11) **EP 1 230 055 B1**
(45) Veröffentlichungstag und Bekanntmachung des Hinweises auf die Patenterteilung: **16.07.2003**
(21) Anmeldenummer: 00971266.2
(22) Anmeldetag: 22.09.2000
(51) Int. Cl.: B22F 3/105, B23K 26/14, B23K 26/00, B29C 67/00, B23K 28/02

(54) **VERFAHREN ZUR HERSTELLUNG VON FORMKÖRPERN ODER ZUM AUFTRAGEN VON BESCHICHTUNGEN**
METHOD FOR PRODUCING SHAPED BODIES OR APPLYING COATINGS
PROCEDE DE PRODUCTION DE CORPS DE FORME OU D'APPLICATION DE REVETEMENTS SUR DES PIECES

(30) Priorität: 11.10.1999 DE 19949972
(43) Veröffentlichungstag der Anmeldung: 14.08.2002
(73) Patentinhaber: FRAUNHOFER-GESELLSCHAFT ZUR FÖRDERUNG DER ANGEWANDTEN FORSCHUNG E.V., 80636 München (DE)
(72) Erfinder: BEYER, Eckhard, 01474 Weissig (DE); NOWOTNY, Steffen, 01445 Radebeul (DE); SCHAREK, Siegfried, 01705 Freital (DE)
(74) Vertreter: Pfenning, Meinig & Partner GbR
(86) Internationale Anmeldenummer: DE0003370
(87) Internationale Veröffentlichungsnummer: WO01026851

(56) Entgegenhaltungen:
- DE-A- 2 263 777
- DE-A- 19 533 960
- US-A- 5 306 447

## Beschreibung

Die Erfindung betrifft ein Verfahren zur Herstellung von Formkörpern oder zum Auftragen von Beschichtungen auf Werkstücken, wobei ausgehend von bekannten Lösungen, die unter dem Begriff Rapid Prototyping und hier insbesondere dem Laserstrahl-Präzisionsauftragschweißens bekannt sind, verfahren werden soll. So kann die Erfindung beispielsweise für die Herstellung verschiedener dreidimensionaler Formkörper mit unterschiedlichst konturierten Oberflächen, auch mit Hohlräumen verwendet werden, wobei auch Hinterschneidungen ohne weiteres erhalten werden können. Außerdem kann eine relativ gute Fertigungsgenauigkeit im Bereich weniger zehntel mm, die nur geringfügige Nachbearbeitungsarbeiten erforderlich machen, gesichert werden.

Ein anderes Anwendungsgebiet für die Erfindung ist die Ausbildung von Beschichtungen auf Werkstücken, die ebenfalls bestimmte konturierte bis zu relativ filigran ausgeführten Oberflächen aufweisen können. So ist es z.B. auch möglich, verschlissene oder zerstörte Oberflächenbereiche von Werkstücken durch den Auftrag entsprechender Beschichtungen wieder in den Originalzustand mit den Ausgangsabmessungen zu bringen. So können ein verschleißbedingter Abtrag genauso, wie infolge aufgetretener Überbelastungen entstandene Zerstörungen wieder ausgeglichen werden.

Das Dokument US-A-5 306 447 offenbart eine Vorrichtung zur Herstellung von Formkörpern oder zum Auftragen von Beschichtungen auf Werkstücken. Der Formkörper oder das Werkstück ist mittels einer Spannvorrichtung gehalten, die in mindestens zwei Achsen in Bezug zu einer oder zwei Wärmequellen bewegbar ist. Die Wärmequellen können ein Plasmabrenner oder/und ein Laserstrahl sein und sind an eine elektronische Steuerung angeschlossen.

In jüngster Vergangenheit sind unter anderem beispielsweise aus DE 195 33 960 A1 verschiedene Möglichkeiten zur Herstellung von Werkstücken bekannt, bei denen das Laserstrahl-Präzisionsauftragschweißen eingesetzt wird. Dabei wird ein solches dreidimensionales Werkstück so hergestellt, dass nacheinander in vielen Einzelschichten mehrlagig ein in den verschiedenen Lagen unterschiedlich dimensioniertes und ausgebildetes dreidimensionales Gebilde sukzessive aufgebaut wird. Hierzu wird ein Laserstrahl entsprechend geführt und geformt, so dass zugeführtes metallisches Pulver mit dem Laserstrahl als Einzelspuren gelegt und aufgeschmolzen wird und eine Schicht in einer Ebene gegebenenfalls mit mehreren parallel nebeneinander gelegten Spuren ausgebildet wird, wobei durch Erreichung sehr kleiner Spurbreiten und Dicken eine relativ gute Fertigungsgenauigkeit, die durch eine zerspanende Bearbeitung noch erhöht wird, erreichbar ist.

Nachteilig an dieser bekannten Lösung ist es aber, dass insbesondere wegen der relativ kleinen erreichbaren Schichtdicken in Verbindung mit den kleinen Spurbreiten der zeitliche Aufwand für die Herstellung eines solchen Werkstückes doch relativ groß ist. Ein weiterer Nachteil besteht darin, dass der Wirkungsgrad zum einen durch den verwendeten Laserstrahl in Verbindung mit dem Absorptionsverhalten des verwendeten Metallpulvers relativ klein ist. Letztgenannter Nachteil wird weiter verstärkt, wenn es insbesondere bei der Ausbildung von Beschichtungen auf Werkstücken erforderlich ist, diese vorzuwärmen oder eine Nacherwärmung zum Halten einer bestimmten Temperatur durchzuführen, da hierzu der verwendete Laserstrahl entsprechend defokussiert werden muss und dadurch, entweder ein zweiter dazu dienender Laserstrahl verwendet werden muss oder eine intermittierende Vorgehensweise mit Erwärmungsphasen bei defokussiertem Laserstrahl und Schichtausbildungsphasen mit fokussiertem Laserstrahl erforderlich ist, was wiederum eine Erhöhung des erforderlichen Zeitaufwandes bedingt.

Es ist daher Aufgabe der Erfindung, eine Möglichkeit vorzuschlagen, mit der nahezu beliebig dreidimensional strukturierte Formkörper hergestellt oder auf verschiedensten Werkstücken auch konturierte Beschichtungen ausgebildet werden kann, wobei gleichzeitig gegenüber herkömmlichen Vorgehensweisen der erforderliche Zeit- und Energieaufwand reduzierbar ist.

Erfindungsgemäß wird diese Aufgabe mit den Merkmalen des Anspruchs 1 gelöst. Vorteilhafte Ausgestaltungsformen und Weiterbildungen der Erfindung ergeben sich mit den in den untergeordneten Ansprüchen und hier insbesondere für eine für das erfindungsgemäße Verfahren verwendbare Vorrichtung im Anspruch 10 enthaltenen Merkmalen.

Erfindungsgemäß wird dabei so verfahren, dass eine Plattform auf der ein dreidimensionaler Formkörper aufgebaut werden soll oder ein Werkstück, das mit einer entsprechenden Beschichtung versehen werden soll, in eine Spannvorrichtung eingespannt wird. Diese Spannvorrichtung und/oder zwei unterschiedliche Wärmequellen sind in mindestens zwei Achsen relativ zueinander bewegbar, wobei eine entsprechende Bewegung der Spannvorrichtung auch in mehr als zwei, bevorzugt bis zu fünf verschiedenen Freiheitsgraden sicher einfacher und günstiger erreichbar ist.

Ein Formkörper kann dann auf dieser Plattform mit einer Vielzahl von einzelnen Schichten sukzessive aufgebaut werden, wobei eine nahezu beliebige dreidimensionale Gestalt erreicht werden kann. Günstigerweise wird auf der Plattform zuerst mindestens ein Sockel aufgebaut, auf dem dann der letztendliche Formkörper hergestellt werden kann. Hierzu bietet sich ein Verfahren mit relativ großer Auftragsrate an, wie dies beispielsweise das Plasma-Auftragschweißen oder die Verwendung eines Induktors, der an einem entsprechenden Induktionsgenerator angeschlossen ist, darstellt.

Im Nachgang dazu wird auf diesem einen oder auch mehreren solcher Sockel der Formkörper aufgebaut, wobei die außenliegenden Schichten oder Randbereiche mittels Laserstrahl-Auftragschweißens hergestellt werden, mit dem kleinere Schichtdicken und Spurbreiten gegenüber den bereits erwähnten anderen Verfahren erreicht werden können, so dass eine größere Fertigungs- und Konturgenauigkeit im letztendlichen Oberflächenbereich eines solchen Formkörpers erreichbar ist.

Die innenliegenden Schichten können dann wieder mit den eingangs erwähnten zwei verschiedenen Verfahren, mit denen größere Schichtdicken und Spurbreiten, als dies beim Laser-Auftragschweißen der Fall ist, erreicht werden können, ausgebildet, so dass die erforderliche Fertigungszeit erheblich verringert werden kann und außerdem die erforderliche Energie durch den entsprechend höheren Wirkungsgrad verringerbar ist.

Ähnlich wird auch bei der Ausbildung einer Beschichtung, zumindest auf Teilen der Oberfläche von Werkstücken verfahren, wobei dabei in der Regel die innenliegenden, also unmittelbar auf der Oberfläche des Werkstückes, das zu beschichten ist, mittels Plasma-Auftragschweißens oder unter Verwendung eines Induktors mit der größeren Auftragsrate ausgebildet werden kann und die letztendliche Deckschicht, die dann die Oberfläche der Beschichtung ausbildet, wird dann im Nachgang mittels Laserstrahl-Auftragschweißen ausgebildet. Mit letzterem Verfahren können auch filigrane Oberflächenstrukturen, die auch relativ weit über die restliche beschichtete Oberfläche hervorstehen können, erzeugt werden.

Sämtliche Schichten mit den verschiedenen genannten Verfahren können nahezu beliebig oft übereinander ausgebildet werden, unabhängig davon, ob ein Formkörper hergestellt oder eine Beschichtung ausgebildet werden soll.

So ist es nicht in jedem Fall erforderlich, sämtliche außenliegenden Oberflächenbereiche von Formkörpern bzw. Beschichtungen mittels Laserstrahl-Auftragschweißens auszubilden bzw. zu beschichten.

Als Schichtmaterialien können zugeführte Metall- oder Keramikpulver aber auch Komposite dieser Stoffe eingesetzt werden. Dabei kann eine solche Pulverzuführung beim Verfahren des Plasma-Auftragschweißens mit einem Trägergas erfolgen.

Es können Plasmabrenner mit Ein- oder Zweielektrodenanordnungen verwendet werden, wobei bei einem Einelektrodenplasmabrenner die Gegenelektrode durch entsprechenden elektrischen Anschluß, durch das gegebenenfalls zu beschichtende Werkstück oder die Plattform bzw. der Formkörper gebildet werden kann, zwischen denen mittels des brennenden Lichtbogens ein Plasma erzeugt wird, mit dem das zugeführte Schichtmaterial aufgeschmolzen werden kann. An Stelle eines pulverförmigen Schichtmaterials kann bei diesem Verfahren aber auch ein metallischer Zusatzdraht für die Ausbildung der entsprechenden Schichten benutzt werden, der in den Lichtbogenbereich bzw. in das Plasma kontinuierlich nachgeführt und dort entsprechend aufgeschmolzen wird.

Es kann aber auch das schichtbildende Material mit einem Plasmabrenner bzw. nur mit einem Lichtbogen aufgeschmolzen und auf eine bereits ausgebildete Schicht oder die zu beschichtende Oberfläche gerichtet werden, wobei die relativ hohe Leistung (ca. 80 kW) mit dem höheren Wikrungsgrad ausgenutzt wird und die letztendliche Schichtausbildung mittels eines Laserstrahls erfolgt, dessen Leistung entsprechend kleiner sein kann. Hierfür kann der Laserstrahl, der für das Laserstrahl-Auftragschweißen verwendet wird, eingesetzt werden.

Werden die Schichten unter Verwendung eines Induktors durch induktive Erwärmung erzeugt, ist es günstig, das verwendete Pulver drucklos in den entsprechend erwärmten Bereich zu fördern, wobei die Erwärmung an der Oberfläche insoweit erfolgen muss, dass die Schmelztemperatur des verwendeten Schichtmaterials erreicht wird. Dabei muss bei Pulvergemischen, wie beispielsweise Legierungen, die gegebenenfalls auch Hartstoffe enthalten können, nicht generell für alle enthaltenen Komponenten die Schmelztemperatur erreicht wird, sondern es genügt, wenn ein maßgebender Teil aufgeschmolzen wird.

Beim Laserstrahl-Auftragschweißen sollte jedoch günstigerweise Pulver verwendet werden.

Die Erfindung kann außerdem vorteilhaft dahingehend ergänzt werden, dass während und/oder nach der Herstellung eines Formkörpers oder der Ausbildung einer Beschichtung eine zerspanende Bearbeitung durchgeführt wird, die auch auf bestimmte Bereiche beschränkt sein kann. Auch hierzu ist es günstig, den Formkörper oder das entsprechende Werkstück in der gleichen Spannvorrichtung zu halten und mit dieser eine entsprechende Ausrichtung der zu bearbeitenden Flächen zu einem Zerspanungswerkzeug (Schleifscheibe, Fräser oder anderes) vorzunehmen. Besonders vorteilhaft ist es, ein automatisches Werkzeugwechselsystem zu verwenden, um Alternativen für die verschiedensten Zerspanungsaufgaben unter Berücksichtigung erforderlicher zu bearbeitender Oberflächen und Bearbeitungsgenauigkeiten zu haben.

Mit dem erfindungsgemäßen Verfahren eröffnet sich auch die Möglichkeit, in einen Formkörper zusätzliche Elemente einzusetzen bzw. zu montieren, die während seiner Herstellung, also in einen noch unfertigen Formkörper an bestimmte Stellen plaziert werden können, die nachfolgend nicht mehr zugänglich sind und mittels des erfindungsgemäßen Verfahrens dann umbaut werden können. Solche Elemente können beispielsweise Lagerungen, Wellen, Sensoren oder auch anderes sein.

Durch die Verwendung zweier unterschiedlicher Wärmequellen eröffnet sich auch in relativ einfacher und effektiver Weise die Möglichkeit einer Vor- und/oder Nacherwärmung bestimmter Bereiche von Formkörpern oder Beschichtungen durchzuführen, um Eigenspannungen im hergestellten Formkörper bzw. einer Beschichtung oder gar am Werkstück weitestgehend zu vermeiden bzw. für bestimmte Applikationen (Druckspannungen) gezielt zu beeinflussen. Die Vor- und/oder Nacherwärmung kann mit dem Plasmabrenner oder dem Induktor durchgeführt werden. Insbesondere bei der Vor- und Nacherwärmung mit einem Induktor ist es günstig, einen ringförmig bzw. schleifenförmig ausgebildeten Induktor zu verwenden und den Laserstrahl für das Laserstrahl-Auftragschweißen durch den Ring bzw. die Schleife zur Ausbildung der Schichten zu richten.

Mit der Erfindung ist es aber auch ohne weiters möglich Kompositformkörper bzw. -Beschichtungen zu erzeugen. Dabei können unterschiedliche Schichtmaterialien für verschiedene Bereiche Verwendung finden. So kann ohne weiteres der innenliegende Teil eines Formkörpers oder der unmittelbar auf der Oberfläche eines Werkstückes liegende Bereich einer Beschichtung mit einem anderen Material, bevorzugt einem kostengünstigeren erzeugt werden, als dies für die außenliegenden Schichtbereiche der Fall ist, die dann in der Regel mit dem Laserstrahl-Auftragschweißen bevorzugt als geschlossene Schicht ausgebildet bzw. aufgebracht werden. So kann beispielsweise eine Verschleißschutzbeschichtung auf Werkstücken kostengünstig und effizient hergestellt werden.

Insbesondere bei der Ausbildung von Beschichtungen auf verschlissenen bzw. zerstörten Werkstückoberflächen ist es vorteilhaft, vor der Ausbildung der Beschichtung, die vorhandene Istkontur zu bestimmen, wobei hierfür ein Digitalisiersystem, z.B. ein taktiles Element bzw. ein optischer Detektor, der bevorzugt an eine elektronische Bildverarbeitung zur Flächenrückführung angeschlossen ist, verwendet werden kann, so dass die Istkontur dreidimensional und bevorzugt in digitalisierter Form vorliegt und einer elektronischen Steuerung zugeführt werden kann. In dieser elektronischen Steuerung kann dann ein Soll-Ist-Vergleich mit einer ebenfalls eingespeicherten Sollkontur der Oberfläche eines Werkstückes erfolgen und anhand dessen der schichtweise Auftrag der verschiedenen Schichten mit den zwei unterschiedlichen Beschichtungsverfahren gezielt gesteuert werden.

Mit einem Abstandssensor aber auch mit einem optischen Detektor kann der Herstellungs- bzw. Beschichtungsvorgang auch kontrolliert werden.

Letzteres wirkt sich insbesondere günstig aus, wenn bei den Verfahren mit größerer Auftragsrate Risse entstanden sind, die dann nach entsprechender Erkennung mittels Laserstrahl-Auftragschweißen geschlossen werden können, bevor mit diesem Verfahren dann wieder außenliegende Schichten und Spuren mit kleinerer Dicke bzw. Breite ausgebildet werden.

Selbstverständlich kann die bereits erwähnte elektronische Steuerung auch für die Manipulation der Spannvorrichtung, der zerspanenden Bearbeitung und gegebenenfalls für das Einsetzen zusätzlicher Elemente in einen entsprechend vorbereiteten Formkörper benutzt werden, wobei für das Einsetzen der zusätzlichen Elemente ein entsprechender Manipulator, wie z.B. ein relativ einfacher Industrieroboter mittels der elektronischen Steuerung gesteuert werden kann.

In bestimmten Fällen kann es erforderlich sein, auch den Abstand der verwendeten unterschiedlichen Wärmequellen zur Lage der jeweils auszubildenden Schichten anzupassen, wobei eine Bewegung zumindest entlang einer Achse durchgeführt werden muss. Hierzu kann einmal die Spannvorrichtung entsprechend bewegt werden, es besteht aber auch die Möglichkeit, die Wärmequellen entsprechend in einer Achse zu verschieben. Dies trifft auch für das Laserstrahl-Auftragschweißen zu, da eine entsprechende Strahlformung durch geeignete Fokussierung nicht in jedem Fall ausreichen kann, um die kleinen Schichtdicken und Spurenbreiten in den verschiedenen Ebenen zu sichern.

Mit der Erfindung können anspruchsvolle Aufgaben des Oberflächenschutzes von Bauteilen oder Werkstücken, eine Reparatur, aber auch eine relativ einfache, kostengüstige und schnelle Fertigung von Prototypen oder die Herstellung von Kleinserien durchgeführt werden. Durch einen viellagigen, konturgesteuerten Werkstoffauftrag sind nahezu beliebige dreidimensionale Strukturen herstellbar, die auch bereichsweise bzw. an der Oberfläche oder in Gänze durch entsprechend verwendete Schichtmaterialien verbesserte Eigenschaften erreichen.

Durch die Kombination der Ausbildung der Schichten mit einer zerspanenden Bearbeitung, die sowohl während des Herstellungs- bzw. Beschichtungsprozesses, aber auch im Anschluß daran durchgeführt werden kann, entfallen zusätzliche Aufwände für Transport, Programmierung, Justierung und Einspannung in weiteren Maschinen, wenn zerspanende Bearbeitungen in der gleichen Spannung durchgeführt werden. Auch kann die Bauteilgestaltung durch zwischendurch mögliche Montage von zusätzlichen Elementen erweitert werden, da bisher bestehende Einschränkungen bezüglich der Bauteilgestaltung, die bisher nachfolgende Fügeprozesse erforderlich machten, entfallen können.

Die erforderlichen Daten, die insbesondere die Abmessungen von Formkörpern, Bauteilen oder Werkstücken beinhalten, sind lediglich für eine elektronische Steuerung erforderlich, da diese gleichzeitig den gesamten Fertigungs- und Montageprozess steuern kann.

Es handelt sich daher um eine komplexe Formgebungsund Herstellungsmethode, was durch abschnittsweise Bearbeitung, auch an Teilflächen während des Herstellungs- und Beschichtungsprozesses, wobei auch Bereiche zerspanend bearbeitet werden können, die an einem fertigen Formkörper nicht mehr erreichbar sind, möglich wird.

Der Formkörper oder das zu beschichtende Werkstück können demzufolge mit hoher Fertigungsgenauigkeit und vollständig bearbeitet aus der Spanneinrichtung entnommen werden, ohne dass zusätzliche Nachbearbeitungen auf anderen Maschinen erforderlich sind.

Es können kleine Toleranzen an Aufnahmen, Führungen oder Lagern erzeugt werden, die beispielsweise in Verbindung mit den verschiedenen mechanischen Bauelementen, wie Wellen, Hebel oder Ventile, aber auch für elektrische oder optische Funktionselemente (Spulen, Sensoren) eingehalten werden müssen. Es können aus den genannten Gründen auch kompakte, komplex ausgebildete Formkörper oder Werkstücke hergestellt oder bearbeitet werden, wobei die erreichbare Präzision nicht nur im Makro-, sondern auch im Mikrobereich, also auch bei relativ kleinen Teilen im mm-Bereich eingehalten werden kann. Bei kleinen Teilen wird bevorzugt ein Mikroplasmabrenner eingesetzt werden, der jedoch eine höhere Auftragsrate, als dies mit dem Laserstrahl-Auftragschweißen möglich ist, erreicht.

Nachfolgend soll die Erfindung beispielhaft erläutert werden.

An einem verschlissenen Schmiedegesenk für die Herstellung von Kraftfahrzeug-Fahrwerksteilen sollte die ursprüngliche Form des Gesenkes wieder hergestellt werden, wobei es sich um eine komplex geformte Gravur am Gesenk handelt. Dabei ist insbesondere bei einem solchen Schmiedegesenk der aufgetretene Verschleiß über die Oberflächenbereiche nicht generell konstant. So kann es erforderlich sein, einen Auftrag an verschiedenen Stellen am Gesenk im Bereich zwischen 10 und 20 mm variiert durchzuführen und dabei selbstverständlich die hohen Anforderungen an das Verschleißverhalten und die Sollkonturnähe an einem solchen Schmiedegesenk wieder zu erreichen.

Hierzu wurde mittels eines Digitalisierungssystems das Oberflächenprofil der verschlissenen Gesenkgravur aufgenommen und mit Hilfe dieser Daten das lokal wieder herzustellende Werkstoffvolumen auf der verschlissenen Oberfläche des Schmiedegesenkes dreidimensional bestimmt. Im Nachgang hierzu wird dann das Beschichtungsregime bestimmt, wobei festgelegt wird, welche Bereiche und mit welcher Gesamtdicke mittels Plasma-Auftragschweißen wieder hergestellt werden, wobei ausgehend von einer bekannten Schichtdicke und Spurbreite die jeweilige Anzahl von übereinander ausgebildeten Schichten lokal aufgelöst bestimmt und deren Ausbildung dann durchgeführt wird.

In verschiedenen Bereichen eines solchen Schmiedegesenkes kann dann eine Fräsbearbeitung durchgeführt werden. Mit dem Plasma-Auftragschweißen sollten etwa 90% des zu ersetzenden Materials aufgebracht werden, wobei die so erhaltene Beschichtung in Form einer Füllage aus einem gut schweißbaren, kostengünstigen Stahl hergestellt werden kann. Dieser Teil der Beschichtung kann mit der elektronischen Steuerung als Multispur-Auftragschweißung erfolgen, wobei eine Auftragsrate zwischen 5 und 12 kg/h erreicht werden kann, ohne dass es Probleme gibt.

Nach einer gegebenenfalls erforderlichen Fräszwischenbearbeitung kann dann eine Deckschicht, als Funktionsschicht, die aus einer Kobalt-Hartlegierung Stellit 21 besteht, mittels Laserstrahl-Auftragschweißen ausgebildet werden, die günstigerweise als eine geschlossene Deckschicht ausgebildet wird. Hierzu kann beispielsweise ein 500 W Festkörperlaser verwendet werden.

Mit dem Laserstrahl-Auftragschweißen können Auftragsraten zwischen 0,1 und 0,5 kg/h erreicht werden. Die Fehlertoleranz zur gewünschten wieder herzustellenden Kontur des Schmiedegesenkes liegt bei ca. + 0,2 mm und kann durch eine nachfolgende Fräsbearbeitung auf die exakte gewünschte Sollkontur gebracht werden.

Für sämtliche Fertigungsschritte, bei den verschiedensten Verfahren können die gleichen CAD-Daten während der gesamten Prozesskette benutzt werden.

## Patentansprüche

1. Verfahren zur Herstellung von Formkörpern oder zum Auftragen von Beschichtungen auf Werkstükken, bei dem ein Formkörper schichtweise aufgebaut oder eine aus mindestens zwei einzelnen Schichten bestehende Beschichtung auf ein Werkstück aufgebracht wird, wobei eine Plattform auf der der Formkörper aufgebaut wird, oder das Werkstück in einer in mindestens zwei Achsen in Bezug zu zwei unterschiedlichen Wärmequellen bewegbaren Spannvorrichtung gehalten ist und die im Formkörper innenliegenden oder die in Richtung auf die Oberfläche des Werkstückes angeordneten Schichten mittels Plasma-Auftragschweißen oder unter Verwendung eines Induktors mit größerer Schichtdicke und Spurbreite der einzelnen Schichten und zumindest eine außenliegende Deckschicht mit kleinerer Schichtdicke und Spurbreite mittels Laserstrahl-Auftragschweißens ausgebildet werden.

2. Verfahren nach Anspruch 1,
**dadurch gekennzeichnet, dass** als Schichtmaterial Metall-, Keramikpulver oder ein metallischer Zusatzdraht verwendet wird.

3. Verfahren nach Anspruch 1 oder 2,
**dadurch gekennzeichnet, dass** während oder nach der Herstellung des Formkörpers und/oder der Ausbildung der Beschichtung eine zumindest bereichsweise zerspanende Bearbeitung durchgeführt wird, wobei der Formkörper oder das Werkstück in der gleichen Spannvorrichtung gehalten ist.

4. Verfahren nach einem der Ansprüche 1 bis 3,
**dadurch gekennzeichnet, dass** während der Herstellung des Formkörpers zusätzliche Elemente eingesetzt und nachfolgend umbaut werden.

5. Verfahren nach einem der Ansprüche 1 bis 4,
**dadurch gekennzeichnet, dass** mit einem Plasmabrenner oder Induktor eine Vor- und/oder Nacherwärmung durchgeführt wird.

6. Verfahren nach einem der Ansprüche 1 bis 5,
**dadurch gekennzeichnet, dass** verschiedene Materialien für die innen- und außenliegenden Schichten verwendet werden.

7. Verfahren nach einem der Ansprüche 1 bis 6,
**dadurch gekennzeichnet, dass** vor der Ausbildung der Beschichtung die Istkontur der zu beschichtenden Werkstückoberflächen bestimmt und die digitalisierten Daten einer elektronischen Steuerung zugeführt werden, um eine bestimmte Sollkontur auf der Oberfläche des Werkstückes durch schichtweisen Auftrag herzustellen.

8. Verfahren nach einem der Ansprüche 1 bis 7,
**dadurch gekennzeichnet, dass** Risse in ausgebildeten Schichten detektiert und mittels Laserstrahlauftragschweißens geschlossen werden.

9. Verfahren nach einem der Ansprüche 1 bis 8,
**dadurch gekennzeichnet, dass** Schichtmaterial durch einen zwischen zwei Elektroden eines Plasmabrenners brennenden Lichtbogen geführt und dort aufgeschmolzen und im geschmolzenen Zustand auf eine Oberfläche eines Werkstückes oder eine bereits ausgebildete Schicht gerichtet und mittels eines Laserstrahls die Schicht(en) ausgebildet wird/werden.

10. Vorrichtung zur Durchführung eines Verfahrens nach einem der Ansprüche 1 bis 9,
**dadurch gekennzeichnet, dass** eine Plattform oder ein Werkstück mittels einer Spannvorrichtung gehalten ist, die in mindestens zwei Achsen in Bezug zu einem Plasmabrenner oder einem Induktor und einer Laserstrahlführungs- und Formungseinheit als Wärmequellen bewegbar ist und an den beiden verwendeten unterschiedlichen Wärmequellen Schichtmaterialzuführungen vorhanden sind, wobei das zugeführte Schichtmaterial mittels der jeweiligen Wärmequelle aufschmelzbar ist und die Wärmequellen und die Schichtmaterialzuführungen an eine elektronische Steuerung angeschlossen sind.

11. Vorrichtung nach Anspruch 10,
**dadurch gekennzeichnet, dass** ein taktiles Element und/oder ein optischer Detektor für die Erfassung der Oberflächenstruktur des Formkörpers oder des Werkstückes vorhanden ist/sind, der/die an die elektronische Steuerung zur Regelung des Prozesses angeschlossen ist.

12. Vorrichtung nach Anspruch 10 oder 11,
**dadurch gekennzeichnet, dass** die Wärmequellen und die Schichtmaterialzuführungen zur Ausbildung von Schichten entlang einer Achse zur Veränderung des Abstandes verschiebbar sind.

13. Vorrichtung nach einem der Ansprüche 10 bis 12,
**dadurch gekennzeichnet, dass** eine Wärmequelle ein Mikroplasmabrenner ist.

14. Vorrichtung nach einem der Ansprüche 10 bis 13,
**dadurch gekennzeichnet, dass** der Induktor ringoder schleifenförmig ausgebildet ist und der Laserstrahl durch den Ring oder die Schleife des Induktors gerichtet ist.

15. Vorrichtung nach einem der Ansprüche 10 bis 14,
**dadurch gekennzeichnet, dass** mindestens eine Einrichtung zur zerspanenden Bearbeitung des Formkörpers oder der Beschichtung vorhanden ist.

16. Vorrichtung nach einem der Ansprüche 10 bis 15,
**dadurch gekennzeichnet, dass** an der Einrichtung zur zerspanenden Bearbeitung ein automatisches Werkzeugwechselsystem angeschlossen ist.

## Claims

1. A method for producing shaped bodies or applying coatings on workpieces wherein a shaped body will be built-up in layers or a coating consisting of at least two individual layers will be applied on a workpiece, wherein a platform on which said shaped body will be built-up or the workpiece are held in a clamping device being movable in at least two axes with respect to two different heat sources, and the layers located inside the shaped body or arranged towards the surface of the workpiece will be formed with a greater layer thickness and track gauge of the individual layers by means of plasma arc weld surfacing or using an inductor, and at least one external cover layer will be formed with a smaller layer thickness and track gauge by means of plasma arc weld surfacing.

2. A method according to claim 1,
**characterized in that** metal powder, ceramic powder or a metallic filler wire are used as layer material.

3. A method according to claim 1 or claim 2,
**characterized in that** at least one machining operation will be performed in related areas during or after producing the shaped body and/ or the formation of the coating wherein said shaped body or said workpiece is held in said same clamping device.

4. A method according to any one of the claims 1 to 3,
**characterized in that** additional elements will be inserted and subsequently surrounded during producing said shaped body.

5. A method according to any one of the claims 1 to 4,
**characterized in that** pre-heating and/ or reheating will be performed with a plasma torch or an inductor.

6. A method according to any one of the claims 1 to 5,
**characterized in that** different materials will be used for the internal and external layers.

7. A method according to any one of the claims 1 to 6,
**characterized in that** prior to forming the coating the actual contour of said workpiece surfaces to be coated will be determined, and the digitized data will be fed to an electronic control in order to make a particular nominal contour on the surface of said workpiece by depositing in layers.

8. A method according to any one of the claims 1 to 7,
**characterized in that** fissures in the formed layers will be detected and closed by means of laser beam deposition welding.

9. A method according to any one of the claims 1 to 8,
**characterized in that** layer material will be guided through an arc burning between two electrodes of a plasma torch, and which there will be molten on and directed in the molten condition upon a surface of a workpiece or a layer already formed, and said layer(s) will be formed by means of a laser beam.

10. A device for implementing a method according to any one of the claims 1 to 9,
**characterized in that** a platform or a workpiece is neld by means of a clamping device which is movable at least in two axes with respect to a plasma torch or an inductor and a laser beam guiding and forming unit as heat sources, and **in that** layer material feeders are present on the two different heat sources used wherein said fed layer material can be molten on by means of the respective heat source, and the heat sources and the layer material feedings can be connected to an electronic control.

11. A device according to claim 10,
**characterized in that** a tactile element and/ or an optical detector is (are) available for the detection of the surface structure of said shaped body or said workpiece which is connected to said electronic control for controlling the process.

12. A device according to claim 10 or claim 11,
**characterized in that** said heat sources and said layer material feedings for the formation of layers are displaceable along an axis to change the distance.

13. A device according to any one of the claims 10 to 12,
**characterized in that** a heat source is a micro plasma torch.

14. A device according to any one of the claims 10 to 13,
**characterized in that** said inductor is formed in an annular or loop manner, and said laser beam is directed through the ring or the loop of said inductor.

15. A device according to any one of the claims 10 to 14,
**characterized in that** at least one device for machining operation of said shaped body or said coating is available.

16. A device according to any one of the claims 10 to 15,
**characterized in that** an automated tool change system is connected to said device for machining operation.

## Revendications

1. Procédé de fabrication de corps de forme ou d'application de revêtements sur des pièces, dans lequel un corps de forme est élaboré par couches ou un revêtement composé d'au moins deux couches différentes est appliqué sur une pièce, dans lequel une plate-forme sur laquelle est élaboré le corps de forme ou la pièce est maintenue dans un dispositif de serrage pouvant être déplacé suivant au moins deux axes par rapport à deux sources de chaleur différentes, et les couches se trouvant dans le corps de forme ou celles disposées en direction de la surface de la pièce sont formées avec de plus grandes épaisseurs de couche et largeur de trace des différentes couches, au moyen d'une soudure à superposition au plasma ou en utilisant un inducteur, et au moins une couche de recouvrement externe présentant de plus faibles épaisseurs de couche et largeur de trace est formée au moyen d'une soudure à superposition au laser.

2. Procédé selon la revendication 1, **caractérisé en ce que** l'on utilise en tant que matériau de couche une poudre métallique ou céramique, ou un fil d'apport métallique.

3. Procédé selon la revendication 1 ou 2, **caractérisé en ce que**, pendant ou après la fabrication du corps de forme et/ou la réalisation du revêtement, on réalise un traitement d'usinage au moins par zones, le corps de forme ou la pièce étant maintenu(e) dans le même dispositif de serrage.

4. Procédé selon l'une des revendications 1 à 3, **caractérisé en ce que**, pendant la fabrication du corps de forme, on utilise des éléments supplémentaires et on les remanie par la suite.

5. Procédé selon l'une des revendications 1 à 4, **caractérisé en ce qu'**on réalise un pré-chauffage et/ou un post-chauffage avec une torche à plasma ou un inducteur.

6. Procédé selon l'une des revendications 1 à 5, **caractérisé en ce que** l'on utilise des matériaux différents pour les couches internes et externe.

7. Procédé selon l'une des revendications 1 à 6, **caractérisé en ce que**, avant l'élaboration du revêtement, on détermine le contour réel des surfaces de la pièce à recouvrir et on transmet les données numérisées à une unité de commande électronique pour fabriquer un contour théorique déterminé sur la surface de la pièce par application en couches.

8. Procédé selon l'une des revendications 1 à 7, **caractérisé en ce que** l'on détecte les criques dans les couches élaborées et qu'on les ferme au moyen d'un soudage à superposition au laser.

9. Procédé selon l'une des revendications 1 à 8, **caractérisé en ce que** le matériau de couche est amené par un arc lumineux électrique formé entre deux électrodes d'une torche à plasma, et y est fondu puis, à l'état fondu, est orienté sur une surface d'une pièce ou sur une couche déjà élaborée, et la ou les couches sont élaborées au moyen d'un rayon laser.

10. Dispositif de réalisation d'un procédé selon l'une des revendications 1 à 9, **caractérisé en ce qu'**une plate-forme ou une pièce est maintenue au moyen d'un dispositif de serrage pouvant être déplacé suivant au moins deux axes par rapport à une torche à plasma ou un inducteur, et d'une unité de commande au laser et de formage en tant que sources de chaleur, et **en ce qu'**il existe au niveau des deux sources de chaleur différentes utilisées des alimentations en matériau de couche, le matériau de couche amené pouvant être fondu au moyen de la source de chaleur respective, et les sources de chaleur et les alimentations en matériau de couche étant raccordées à une unité électronique de commande.

11. Dispositif selon la revendication 10, **caractérisé en ce qu'**un élément tactile et/ou un détecteur optique permettant d'enregistrer la structure de surface du corps de forme ou de la pièce existe(nt), et est(sont) raccordé(s) à l'unité électronique de commande afin de réguler le processus.

12. Dispositif selon la revendication 10 ou 11, **caractérisé en ce que** les sources de chaleur et les alimentations en matériau de couche peuvent être déplacées pour former des couches le long d'un axe afin de modifier l'écartement.

13. Dispositif selon l'une des revendications 10 à 12, **caractérisé en ce qu'**une source de chaleur est une torche à micro-plasma.

14. Dispositif selon l'uns des revendications 10 à 13, **caractérisé en ce que** l'inducteur est conçu en forme d'anneau ou de boucle, et que le rayon laser est orienté par l'anneau ou la boucle de l'inducteur.

15. Dispositif selon l'une des revendications 10 à 14, **caractérisé en ce qu'**il existe au moins une unité de traitement par usinage du corps de forme ou du revêtement.

16. Dispositif selon l'une des revendications 10 à 15, **caractérisé en ce qu'**un système automatique de changement d'outil est raccordé au dispositif de traitement par usinage.
